(19) Europäisches Patentamt
European Patent Office
Office européen des brevets

(11) EP 2 607 862 A1

(12) DEMANDE DE BREVET EUROPEEN

(43) Date de publication:
26.06.2013 Bulletin 2013/26

(51) Int Cl.:
G01F 1/56 (2006.01)     F23N 5/18 (2006.01)

(21) Numéro de dépôt: 11447030.5

(22) Date de dépôt: 23.12.2011

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(71) Demandeur: GenId SPRL
7080 LA Bouverie (BE)

(72) Inventeurs:
• Gonsette, Charles-Etienne
7000 Mons (BE)
• Gonsette, Jean-Sébastien
7080 La Bouverie (BE)

(74) Mandataire: Cauchie, Daniel
Office Parette (Fred Maes),
Avenue Gabrielle Petit 2
7940 Brugelette (BE)

(54) **Méthode et dispositif pour déterminer la consommation énergétique d'une chaudière**

(57) La présente invention se rapporte à une méthode pour déterminer, en temps réel, la consommation énergétique d'une chaudière (1) à partir du signal électrique de commande (4) transmis par le régulateur au brûleur.

Selon l'invention, cette méthode est caractérisée en ce que :

a) durant un intervalle de temps comprenant une pluralité d'instants t, on réceptionne ledit signal électrique de commande, acquis sans perturbation significative du signal originel, et on le conditionne électriquement en vue d'une interprétation par une unité de calcul,

b) on transmet ce signal électriquement conditionné à une unité (6) de calcul qui lui applique, ainsi qu'aux valeurs des paramètres qui sont fonction des caractéristiques dudit brûleur, une transformation mathématique qui convertit ce signal de commande et ces valeurs des paramètres en consommation de combustible, ce qui permet de déterminer la consommation de combustible à chaque instant t,

c) on intègre alors, en fonction du temps, cette consommation de combustible à chaque instant t, ce qui permet de déterminer la consommation énergétique durant ledit intervalle de temps.

L'invention concerne également un dispositif pour la mise en oeuvre de cette méthode.

Fig.2

EP 2 607 862 A1

**Description**

La présente invention se rapporte, d'une manière générale, à une méthode pour déterminer la consommation énergétique d'une chaudière.

Plus précisément, l'invention concerne une méthode pour déterminer, en temps réel, la consommation énergétique d'une chaudière à partir du signal électrique de commande transmis par le régulateur au brûleur.

Les systèmes domotiques permettant d'acquérir et d'analyser la consommation énergétique d'une habitation domestique disposent de différents capteurs qui permettent d'acquérir la consommation en électricité, eau, gaz ou fioul. Généralement, la consommation en gaz ou en fioul est obtenue moyennant le comptage d'impulsions électriques délivrées par un compteur de débit approprié. Toutefois, une installation domestique n'est pas toujours spécifiquement équipée avec ce genre de compteur de gaz ou de fioul. Dans ce cas, un individu désireux de mesurer sa consommation de gaz ou de fioul de façon automatique, doit procéder à l'installation d'un compteur ou débitmètre directement sur la conduite de gaz ou de fioul afin de réaliser une mesure directe du combustible. Ce genre d'intervention peut s'avérer onéreuse et difficile à appliquer dans le cadre d'un usage domestique car elle nécessite l'intervention d'un professionnel et l'achat d'un nouveau compteur.

On a décrit, dans la demande de brevet WO 2004/001297, une unité de contrôle d'une chaudière destinée à contrôler un brûleur, cette unité comprenant elle-même une unité de commande de cycles retardés qui agit selon deux modes de fonctionnement.

Selon un premier mode de fonctionnement, un relais thermique ouvre un signal de commande lorsque la température dans la chaudière descend sous un niveau de température préprogrammé. Toutefois, l'unité de commande de cycles retardée n'enclenche pas immédiatement le signal de commande mais le retarde.

Selon un second mode de fonctionnement, l'unité de commande de cycles retardés enclenche sans retard le signal de commande du brûleur c'est-à-dire dès que la température de la chaudière diminue sous le niveau de la faible température de référence.

Dans les deux cas de figure, la fermeture du signal de commande du brûleur s'opère dès la fermeture du signal provenant du relais thermique.

En outre, l'unité de contrôle de la chaudière comprend une unité de contrôle de surveillance qui a notamment pour effet, selon une programmation préétablie, de faire fonctionner l'unité de commande de cycles retardés selon le premier ou le second mode de fonctionnement ci-dessus.

D'autre part, il est précisé que l'unité de commande de la chaudière est, en outre, agencé pour calculer dans un intervalle de temps, le temps d'activation cumulé du signal de commande du brûleur. Ce temps d'activation cumulé représente la consommation d'énergie totale dans cet intervalle. Toutefois, le résultat obtenu semble peu précis car ne reposant que sur des périodes d'activation du brûleur durant un intervalle de temps donné sans tenir compte d'autres paramètres notamment les caractéristiques du brûleur. Par ailleurs, il est précisé que le temps d'activation cumulé représente la consommation totale d'énergie du brûleur durant l'intervalle de temps considéré c'est-à-dire est proportionnel à cette consommation d'énergie.

En conséquence, la présente invention a pour but de proposer une méthode capable de mesurer, de manière précise, la consommation énergétique en temps réel, d'une chaudière au gaz, au fioul ou aux pellets, toutefois de manière indirecte et pour différents types de brûleurs, sans nécessiter l'installation d'un compteur ou débitmètre spécifique sur l'installation domestique existante.

Pour atteindre ce but, la méthode selon l'invention est **caractérisée en ce que** :

a) durant un intervalle de temps comprenant une pluralité d'instants t, on réceptionne ledit signal électrique de commande, acquis sans perturbation significative du signal originel, et on le conditionne électriquement en vue d'une interprétation par une unité de calcul,

b) on transmet ce signal électriquement conditionné à une unité de calcul qui lui applique, ainsi qu'aux valeurs des paramètres qui sont fonction des caractéristiques dudit brûleur, une transformation mathématique qui convertit ce signal de commande et ces valeurs des paramètres en consommation de combustible, ce qui permet de déterminer la consommation de combustible à chaque instant t,

c) on intègre alors, en fonction du temps, cette consommation de combustible à chaque instant t, ce qui permet de déterminer la consommation énergétique durant ledit intervalle de temps.

Ainsi, la méthode selon l'invention se fonde sur l'analyse de la consommation de combustible en fonction du profil de combustion et sur le type de brûleur utilisé, la détection des phases de combustion et de repos se basant sur l'analyse de l'activité électrique (électrovannes, signal de commande etc. du brûleur, pompe à carburant).

Plus précisément, la consommation en combustible d'une chaudière, qui brûle du fioul, du gaz ou des pellets, dépend notamment du signal électrique de commande d'activation du brûleur. Dans le cadre de l'invention, ce signal électrique de commande, qui est généré par la chaudière, est intercepté et acquis sans toutefois le modifier afin de ne pas perturber le comportement de cette chaudière. En tout état de cause, la méthode selon l'invention ne tient pas compte de la logique interne de décision du brûleur : seul le signal de déclenchement de celui-ci est pris en considération.

Selon le type de brûleur utilisé, ce signal de commande peut être constitué d'un signal électrique unique ou de plusieurs signaux électriques. A titre d'exemple, un brûleur « multi allures » peut avoir une logique de commande qui repose sur plus d'un signal électrique.

Dans le contexte de la présente description et des revendications, on désignera par « signal électrique de commande du brûleur » le ou les signaux électriques aptes à assurer le déclenchement ou activation de ce brûleur.

Après sa réception, le signal électrique de commande du brûleur est conditionné électriquement ou, en d'autres termes, mis sous une forme compatible avec une électronique de mesure, puis converti en consommation réelle, par exemple en $m^3/h$, en l/s ou autres. Cette conversion en consommation de combustible se présente comme une opération purement mathématique réalisée par un moyen approprié, habituellement un logiciel informatique, dès acquisition et numérisation de ce signal électrique de commande.

Toutefois, cette transformation mathématique est non seulement fonction du signal électrique de commande du brûleur mais également fonction d'autres paramètres inconnue à l'origine lesquels sont eux-mêmes fonction des caractéristiques de ce brûleur.

En conclusion, la consommation de combustible à chaque instant t est calculée, selon l'invention, grâce à la connaissance du signal de commande du brûleur ainsi que des valeurs des paramètres qui sont fonction des caractéristiques de ce brûleur. Les valeurs de ces paramètres peuvent être déterminées lors d'une calibration de la chaudière.

En conséquence, selon une autre caractéristique de la méthode selon l'invention, on procède, sur base des données réelles de consommation de combustible, à la détermination des valeurs des paramètres qui sont fonction des caractéristiques du brûleur.

Généralement, ce brûleur correspond à l'une des trois grandes catégories qui sont les brûleurs simple allure, les brûleurs double allure et les brûleurs modulant.

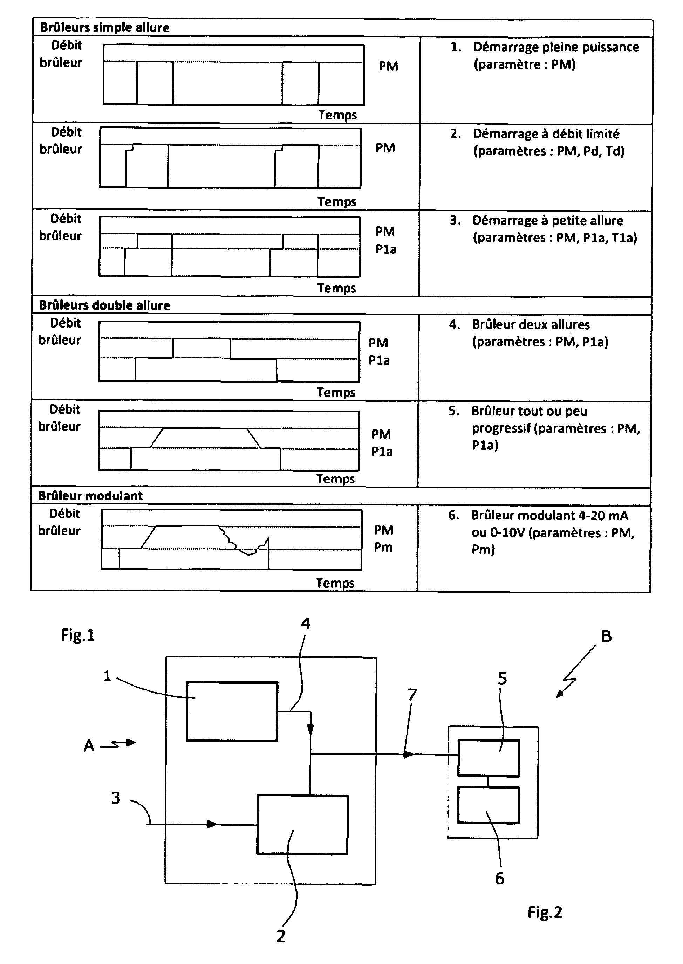

On a décrit dans le site Internet http://www.energiepluslesite.be/energieplus/page 10952.htm, différents types de brûleurs disponibles actuellement sur le marché ainsi que leurs caractéristiques propres. Ces différents types de brûleurs sont repris ci-dessous de même que le ou les paramètres qui les caractérisent tandis que les courbes schématiques de consommation de ces brûleurs sont illustrées, à titre indicatif, à la Figure 1 en annexe.

A) Brûleurs simple allure

1. Démarrage pleine puissance

Paramètres caractéristiques : débit maximal du brûleur (PM).

2. Démarrage à débit limité

Paramètres caractéristiques: débit maximal du brûleur (PM) ; débit de démarrage du brûleur (Pd) ; durée de la période de démarrage du brûleur (td).

3. Démarrage à petite allure

Paramètres caractéristiques: débit maximal du brûleur (PM) ; Débit 1ère allure du brûleur (Pla) ; durée de la période de démarrage 1ère allure du brûleur (tla).

Un brûleur simple allure est commandé par un signal tout ou rien. Toutefois, pour des raisons d'efficacité de combustion, le brûleur ne démarre pas nécessairement à son débit maximal mais passe par une phase de démarrage à débit plus faible. En plus du signal de commande, la courbe de débit de ce brûleur dépend donc principalement de trois paramètres à savoir le débit de démarrage, le temps de démarrage et le débit maximal.

Pour les brûleurs simple allure, le signal, intercepté dans le cadre de la méthode selon l'invention, permet de déterminer les périodes d'activité du brûleur et les périodes de repos.

B) Brûleurs double allure

4. Brûleur deux allures

Paramètres caractéristiques: débit maximal du brûleur (PM) ; débit 1ère allure du brûleur (P1a).

5. Brûleur tout ou peu progressif

Paramètres caractéristiques: débit maximal du brûleur (PM) ; débit 1ère allure du brûleur (P1a).

Un brûleur double allure est commandé par un signal à trois états. Le brûleur peut être désactivé, commandé en première allure ou commandé en deuxième allure. En plus du signal de commande, la courbe de débit de ce brûleur dépend principalement de trois paramètres ; le débit première allure, le débit deuxième allure ou débit maximal et le temps de transition d'une allure à l'autre.

Pour les brûleurs double allure, le signal de commande du brûleur, constitué de plusieurs signaux électriques interceptés, permet de déterminer les périodes pendant lesquelles le brûleur consomme du combustible avec faible débit, les périodes durant lesquelles le brûleur consomme du combustible avec débit élevé et les périodes de repos.

C) Brûleurs modulant

6. Brûleur modulant 4-20 mA ou 0-10v

Paramètres caractéristiques: débit maximal du brûleur (PM) ; débit minimal du brûleur (Pm).

Un brûleur modulant est commandé par un signal analogique proportionnel au débit de combustible souhaité. En plus du signal de commande, la courbe de débit du brûleur dépend principalement de deux paramètres : le débit maximal et le débit minimal.

Pour les brûleurs modulant, le signal de commande intercepté, dans le cadre de la méthode selon l'invention, permet de déterminer à chaque instant t une image du débit de combustible consommé par le brûleur. Cette image est fonction du débit réel de ce combustible consommé.

Dans le cas, par exemple, d'un brûleur simple allure et à démarrage à débit limité, la consommation de combustible à chaque instant t peut s'écrire selon les équations suivantes :

$d(t) = 0$ (si la commande du brûleur n'est pas enclenchée).

$d(t) = Pd$ (si t inférieur à $ta + td$ et si la commande du brûleur est enclenchée).

$d(t) = PM$ (si t supérieur ou égal à $ta + td$ et si la commande du brûleur est enclenchée)

dans lesquelles :

Pd représente le débit de démarrage du brûleur,
PM représente le débit maximal du brûleur,
ta représente le dernier instant d'allumage du brûleur et est déduit de l'acquisition du signal de commande de ce brûleur,
td représente la durée de la période de démarrage du brûleur.

Dans ces équations, Pd, PM et td sont inconnus et représentent des paramètres qui sont fonction des caractéristiques du brûleur. Les valeurs de ces paramètres doivent être déterminés lors d'une calibration de la chaudière.

En conséquence, selon une autre caractéristique de l'invention, on recueille des données réelles de consommation de combustible sur une période de temps donnée et on les transmet à l'unité de calcul qui détermine les valeurs des paramètres qui sont fonction des caractéristiques du brûleur.

Le processus de calibration de la chaudière débute lorsque la méthode selon l'invention est mise en oeuvre la première fois pour une chaudière donnée. A cet effet, des données réelles de consommation de cette chaudière, durant un intervalle de temps donné, sont relevées par l'utilisateur sur son compteur de gaz ou par la mesure de ses cuves à fioul. La calibration en question peut être ensuite réalisée en n+1 mesures, n représentant le nombre de paramètres qui caractérisent le brûleur.

A titre d'exemple, dans le cas d'un brûleur simple allure à débit limité, la consommation d'énergie pendant l'intervalle de temps t2-t1, soit Ei, peut être représentée par l'équation suivante :

$$Ei = PM.(t2-t1-td) + Pd.td$$
$$= PM.(ti-td) + Pd.td$$

dans laquelle :

PM représente le débit maximal du brûleur,

t1 représente l'instant du début de combustion et est déduit du signal de commande du brûleur,

t2 représente l'instant de fin de combustion et est déduit du signal de commande du brûleur,

Pd représente le débit de démarrage du brûleur,

td représente la durée de la période de démarrage du brûleur.

Sur une période de temps T, la consommation d'énergie correspond, par conséquent, à l'équation suivante :

$$E(T)= \Sigma ei= PM.\Sigma ti + Pd.td.N(T) - PM.td.N(T)$$
$$= \Sigma Ei= PM.A(T) + PM.td.N(T) - PM.td.N(T)$$

dans laquelle:

N(T) représente le nombre de démarrages de combustion sur la période de temps T,

A(T) représente le temps total d'activité de la chaudière sur cette période de temps T.

En relevant la consommation réelle, ce qui équivaut à 4 relevés de compteur espacés dans le temps, on obtient le système d'équations suivant :

$$E1= PM.A1 + PM.td.N1 - PM.td.N1$$

$$E2= PM.A2 + PM.td.N2 - PM.td.N2$$

$$E3= PM.A3 + PM.td.N3 - PM.td.N3$$

dans lequel:

A1, A2, A3 représentent la durée de fonctionnement totale du brûleur durant respectivement le 1er, le 2ème et le 3ème intervalle de temps,

N1, N2, N3 représentent le nombre total de démarrages du brûleur durant respectivement le 1er, le 2ème et le 3ème intervalle de temps.

Il s'agit d'un système de trois équations à trois inconnues à savoir Pd, PM et td, dont la résolution, au moyen d'un algorithme mathématique, permet la calibration fine d'une chaudière munie d'un brûleur simple allure et à démarrage à débit limité.

Une méthode similaire permet de déduire les valeurs inconnues des paramètres qui sont fonction des caractéristiques des brûleurs double allure et des brûleurs modulant.

Dans le cadre de la méthode selon la présente invention, les paramètres qui sont fonction des caractéristiques du brûleur et dont les valeurs peuvent être déterminées sont habituellement sélectionnés, selon le type de brûleur considéré, parmi notamment les paramètres suivants, à savoir le débit maximal du brûleur (PM), le débit de démarrage du brûleur (Pd), le débit 1ère allure du brûleur (P1a), le débit minimum du brûleur (Pm), la durée de la période de démarrage du brûleur (Ta) et la durée de la période de démarrage 1ère allure du brûleur (t1a).

En outre, selon une caractéristique supplémentaire de l'invention, on recueille des données propres au brûleur ou en relation avec celui-ci et on les transmet à une unité de calcul afin de réaliser une estimation théorique et automatique de la courbe de transformation du signal électrique de commande de ce brûleur en consommation énergétique.

Cette estimation de la courbe de transformation du signal électrique du brûleur est réalisée en se basant sur les paramètres suivants :

- le type de brûleur de la chaudière,
- la puissance nominale théorique et la puissance en régime intermédiaire du brûleur,
- le type de combustible utilisé et ses caractéristiques, par exemple son pouvoir calorifique.

D'autre part, cette estimation peut être effectuée avant le processus de calibration de la chaudière afin, par exemple, de prévoir le résultat à obtenir lors de ce processus, ou après ce processus de calibration de façon, notamment, à vérifier la cohérence du résultat obtenu lors de la mise en oeuvre de ce processus.

Selon une autre de ses caractéristiques, l'invention se rapporte à un dispositif pour la mise en oeuvre de la méthode selon l'invention, dispositif comprenant:

a) une unité disposant:

- de moyens aptes d'une part à réceptionner, durant un intervalle de temps comprenant une pluralité d'instants t, le signal électrique de commande transmis par le régulateur au brûleur et acquis sans perturbation significative du signal originel et d'autre part à conditionner électriquement ce signal électrique de commande,
- de moyens aptes à transmettre ce signal électrique de commande conditionné à une unité de calcul,

b) une unité de calcul disposant :

- de moyens aptes à réceptionner ce signal électrique de commande conditionné ,
- de moyens aptes, par application d'une fonction de transformation mathématique audit signal électrique de commande conditionné et aux valeurs des paramètres qui sont fonction des caractéristiques du brûleur, à convertir ce signal électrique de commande conditionné et ces valeurs des paramètres en consommation de combustible de façon à déterminer la consommation de combustible à chaque instant t,
- de moyens aptes à intégrer, en fonction du temps, cette consommation de combustible à chaque instant t de manière à déterminer la consommation énergétique durant ledit intervalle de temps.

Selon une autre caractéristique particulière, le dispositif selon l'invention est doté de moyens capables de réceptionner des données réelles de consommation ainsi que de moyens aptes à déterminer, sur base de ces données, les valeurs des paramètres qui sont fonction des caractéristiques du brûleur.

A titre d'exemples, ces paramètres qui sont fonction des caractéristiques du brûleur peuvent être sélectionnés, selon le type de brûleur considéré, parmi les paramètres suivants à savoir le débit maximal du brûleur (PM), le débit de démarrage du brûleur (Pd), le débit 1ère allure du brûleur (P1a), le débit minimum du brûleur (Pm), la durée de la période de démarrage du brûleur (Ta) et la durée de la période de démarrage 1ère allure du brûleur (t1a).

Les valeurs inconnues de ces paramètres du brûleur, par exemple le débit maximal du brûleur (PM), la durée de la période de démarrage du brûleur (td) et le débit de démarrage du brûleur (Pd), sont déterminées selon un processus de calibration réalisé lorsque la méthode selon l'invention est mise en oeuvre pour la première fois pour une chaudière donnée.

Dans ce cas de figure, le dispositif selon l'invention dispose de moyens appropriés pour proposer à l'utilisateur de débuter cette calibration en validant une première donnée absolue de la consommation en combustible de cette chaudière. Selon le type de chaudière concernée, cette donnée peut être par exemple le nombre de litres restant dans la cuve à fioul dans le cas d'une chaudière au fioul ou encore la valeur de consommation affichée au compteur du fournisseur de gaz dans le cas d'une chaudière au gaz. D'autre part, le dispositif selon l'invention est également muni de moyens capables de déterminer le nombre de mesures consécutives de consommation de combustible espacées dans le temps qui doivent être relevées lors de la réalisation du processus de calibration et d'en avertir l'utilisateur. Ce nombre de mesures est déterminé en fonction du type de brûleur en présence à savoir brûleur simple allure, double allure ou modulant.

La calibration prend fin lorsque l'utilisateur valide la dernière donnée absolue de consommation en combustible. Le dispositif selon l'invention peut alors déduire les différentes consommations relatives lors de cette phase de calibration. Un algorithme mathématique permet finalement de calculer les valeurs des paramètres inconnus de la transformation mathématique recherchée.

Selon une autre caractéristique particulière, le dispositif selon l'invention est doté de moyens capables de réceptionner des données propres au brûleur, ou en relation avec celui-ci, afin de réaliser, en fonction du type de brûleur et du type de combustible utilisés et ce, à l'aide d'un moyen approprié, une estimation théorique et automatique de la courbe de transformation du signal électrique de commande de ce brûleur en consommation énergétique.

Habituellement, cette estimation théorique de la courbe de transformation du signal électrique de commande du brûleur est effectuée, par exemple à l'aide d'un logiciel informatique, en se basant notamment sur le type de brûleur considéré, sur sa puissance nominale théorique et sur ses puissances en régime intermédiaire ainsi que sur le type de combustible utilisé et sur les caractéristiques de celui-ci, par exemple son pouvoir calorifique.

Ordinairement, le dispositif selon l'invention est piloté par un microprocesseur qui, une fois raccordé correctement à la chaudière, permet, par mise en oeuvre de la méthode selon l'invention, d'en mesurer précisément sa consommation en temps réel.

A cet effet, le signal électrique de commande du brûleur est intercepté grâce à une unité électronique acceptant une large plage de tension d'entrée. Cette plage se situe, de préférence, entre 24 VAC et 240 VAC par souci de compatibilité avec tous les brûleurs de chaudières connus. L'unité électronique dispose d'une haute impédance d'entrée afin de ne pas altérer le comportement de la chaudière et de son brûleur.

Le dispositif selon l'invention peut également fournir un signal de sortie compatible avec des appareils électroniques, ce signal permettant de communiquer la consommation de combustible en temps réel moyennant par exemple une sortie à impulsion délivrant des impulsions en fonction de la consommation. Le signal en question est composé de pulses électriques dont le nombre par unité de temps est proportionnel à la consommation. A titre d'exemple, un pulse pourrait correspondre à un kWh.

D'autre part, le dispositif selon l'invention peut être muni également d'un enregistreur de données disposant par exemple d'un micro-contrôleur et de mémoire. En outre, les données de consommation recueillies sur la chaudière peuvent être enregistrées et stockées dans le dispositif selon l'invention, lequel peut être connecté, le cas échéant, à un ordinateur pour afficher ces données et éventuellement les traiter.

L'invention sera mieux comprise et d'autres buts, caractéristiques et avantages de celle-ci apparaîtront plus clairement au cours de la description explicative qui va suivre faite en référence au dessin annexé donné uniquement à titre d'exemple non limitatif illustrant un mode de réalisation de l'invention et dans lequel la figure 2 est une représentation schématique du dispositif selon l'invention relié à une installation de chauffage dotée d'un brûleur simple allure à débit limité.

## DISPOSITIF SELON L'INVENTION

Tel que représenté à cette figure 2, l'installation de chauffage A comprend une chaudière 1 et un brûleur 2 simple allure à débit limité destiné à brûler un combustible comme du gaz ou du fioul provenant d'une canalisation 3 reliée à une réserve (non représentée) de ce combustible. Ce brûleur reçoit un signal électrique de commande d'activation 4 provenant d'une unité de régulation (non représentée) de la température de cette chaudière située à l'intérieur de celle-ci. D'autre part, la figure 2 montre un dispositif B, selon l'invention, lequel comprend une unité 5 de réception et de conditionnement électrique du signal de commande 4, cette unité 5 étant en liaison avec une unité 6 de calcul.

## MISE EN OEUVRE DU DISPOSITIF SELON L'INVENTION

Lors d'une mise en oeuvre du dispositif B pour la détermination de la consommation énergétique de la chaudière 1, par exemple dans un intervalle de temps allant de tl à tx, x représentant un nombre entier, l'unité 5 de réception et de conditionnement du signal électrique de commande 4 récupère celui-ci en provenance du régulateur (non représenté) et selon la dérivation 7. Ce signal 4, acquis sans perturbation significative, est ensuite numérisé dans un micro-contrôleur (non représenté), conditionné électriquement dans cette unité 5 puis transmis à l'unité 6 de calcul. Les valeurs des paramètres caractéristiques du brûleur 2, déterminées lors d'une calibration préliminaire de la chaudière, ainsi que le signal électrique de commande 4 subissent alors, au sein de cette unité de calcul, une transformation mathématique en consommation de combustible, ce qui détermine la consommation de combustible à chaque instant t de l'intervalle t1 à tx, soit t1, t2, t3...tx. L'unité de calcul intègre ensuite en fonction du temps la consommation de combustible à chaque instant t ainsi déterminée, ce qui donne la consommation énergétique de la chaudière 1 durant l'intervalle t1 à tx. Si nécessaire, la courbe montrant la consommation énergétique, dans l'intervalle t1 à tx, peut être stockée et/ou représentée par tout moyen approprié et sur tout support adéquat, par exemple sur un écran connecté au dispositif B.

## ESTIMATION THEORIQUE DE LA CONSOMMATION ENERGETIQUE

Lors d'une première utilisation du dispositif B pour déterminer la consommation énergétique de la chaudière 1, on procède à une estimation théorique et automatique de la courbe de transformation du signal électrique de commande 4 du brûleur 2 en consommation énergétique et ce, en fonction du type de brûleur et de combustible utilisés. A cet effet, on introduit dans l'unité 6 de calcul, de ce dispositif, des données relatives au brûleur 2 simple allure à débit limité utilisé, données relatives à sa puissance nominale théorique et à sa puissance en régime intermédiaire ainsi des données relatives au type de combustible utilisé et à ses caractéristiques. L'estimation de la courbe de transformation du signal électrique de commande du brûleur est ensuite réalisée à l'aide d'un logiciel informatique approprié présent dans l'unité de calcul et, si nécessaire, stockée et/ou affichée sur un écran.

CALIBRATION DE LA CHAUDIERE ET DETERMINATION DE LA CONSOMMATION DE COMBUSTIBLE

On réalise ensuite, toujours lors d'une première utilisation du dispositif B, une calibration fine de la chaudière 1, afin de déterminer les valeurs des paramètres qui sont fonction des caractéristiques du brûleur 2, soit le débit de démarrage (Pd), le débit maximal (PM) et la durée de la période de démarrage (td), en se basant sur les données réelles de consommation de cette chaudière durant un intervalle de temps donné, par exemple t2-t1. A cet effet :

1) L'utilisateur démarre la calibration en introduisant dans l'unité 6 de calcul une première valeur absolue de consommation soit C1. Cette mesure peut être, par exemple, la valeur affichée à un compteur notamment un compteur de gaz du distributeur d'énergie ou le niveau de combustible dans une cuve par exemple le niveau de fioul,

2) Le dispositif B débute le comptage du nombre de périodes distinctes durant lesquelles le brûleur est activé, cette valeur étant dénommée N1 et débute le calcul de la durée de fonctionnement totale du brûleur, cette valeur étant dénommée A1,

3) L'utilisateur introduit, dans l'unité de calcul, une nouvelle valeur de consommation soit C2. La durée séparant la mesure et l'introduction de C1 et C2 doit être suffisante. Plus elle est longue, plus la calibration sera précise,

4) Le dispositif B mémorise la dernière valeur N1 et A1 et débute le comptage de valeurs similaires N2 et A2,

5) L'utilisateur introduit, dans l'unité de calcul, une nouvelle valeur de consommation soit C3,

6) Le dispositif B mémorise la dernière valeur N2 et A2 et débute le comptage de valeurs similaires soient N3 et A3,

7) L'utilisateur introduit, dans l'unité de calcul, une nouvelle valeur de consommation soit C4. L'introduction de cette valeur dans le dispositif B clôture la phase de calibration pour l'utilisateur,

8) et 9) Le dispositif B mémorise les dernières valeurs N3 et A3, puis résout, au moyen d'un algorithme mathématique, le système d'équations suivant :

$$C2-C1 = PM.A1 + Pd.td.N1 - PM.td.N1$$

$$C3-C2 = PM.A2 + Pd.td.N2 - PM.td.N2$$

$$C4-C3 = PM.A3 + Pd.td.N3 - PM.td.N3$$

soit un système de trois équations comprenant les trois inconnues recherchées Pd, PM et td.

Une fois la calibration terminée, le dispositif B calcule la consommation réelle de la chaudière 1 durant l'intervalle de temps t2-t1 en intégrant la fonction donnant la consommation de combustible à chaque instant t de cet intervalle soit la fonction :

$$Consommation(t) = intégrale \; [d(t).dt]$$

**Revendications**

1. Méthode pour déterminer, en temps réel, la consommation énergétique d'une chaudière (1) à partir du signal électrique de commande (4) transmis par le régulateur au brûleur (2), **caractérisée en ce que**:

   a) durant un intervalle de temps comprenant une pluralité d'instants t, on réceptionne ledit signal électrique de commande, acquis sans perturbation significative du signal originel, et on le conditionne électriquement en vue d'une interprétation par une unité de calcul,

   b) on transmet ce signal électriquement conditionné à une unité (6) de calcul qui lui applique, ainsi qu'aux valeurs des paramètres qui sont fonction des caractéristiques dudit brûleur, une transformation mathématique qui convertit ce signal de commande et ces valeurs des paramètres en consommation de combustible, ce qui permet de déterminer la consommation de combustible à chaque instant t,

   c) on intègre alors, en fonction du temps, cette consommation de combustible à chaque instant t, ce qui permet de déterminer la consommation énergétique durant ledit intervalle de temps.

2. Méthode selon la revendication 1, **caractérisée en ce que** l'on procède, sur base des données réelles de consommation de combustible, à la détermination des valeurs des paramètres qui sont fonction des caractéristiques du brûleur.

3. Méthode selon la revendication 2, **caractérisée en ce que** l'on recueille des données réelles de consommation de combustible sur une période de temps donnée et **en ce que** l'on transmet ces données à l'unité de calcul qui détermine les valeurs des paramètres qui sont fonction des caractéristiques du brûleur.

4. Méthode selon la revendication 3, **caractérisée en ce que** les paramètres qui sont fonction des caractéristiques du brûleur comprennent, selon le type de brûleur utilisé, le débit maximal du brûleur (PM), le débit de démarrage du brûleur (Pd), le débit 1ère allure du brûleur (Pla), le débit minimum du brûleur (Pm), la durée de la période de démarrage du brûleur (Ta) et la durée de la période de démarrage 1ère allure du brûleur (t1a).

5. Méthode selon la revendication 1, **caractérisée en ce que** l'on recueille des données propres au brûleur ou en relation avec celui-ci et on les transmet à une unité de calcul afin de réaliser une estimation théorique et automatique de la courbe de transformation du signal électrique de commande de ce brûleur en consommation énergétique.

6. Méthode selon la revendication 5, **caractérisée en ce que** les données propres au brûleur ou en relation avec celui-ci comprennent le type de brûleur utilisé, sa puissance nominale théorique et ses puissances en régime intermédiaire ainsi que le type de combustible utilisé et les caractéristiques de celui-ci.

7. Méthode selon la revendication 5 ou 6, **caractérisée en ce que** l'estimation théorique et automatique de la courbe de transformation du signal électrique de commande de ce brûleur en consommation énergétique est réalisée au moyen d'un logiciel informatique.

8. Dispositif pour la mise en oeuvre de la méthode selon l'une des revendications 1 à 7, **caractérisé en ce qu'**il comprend :

    a) une unité (5) disposant:

    - de moyens aptes d'une part à réceptionner, durant un intervalle de temps comprenant une pluralité d'instants t, le signal électrique de commande transmis par le régulateur au brûleur (2) et acquis sans perturbation significative du signal originel et d'autre part à conditionner électriquement ce signal électrique de commande,
    - de moyens aptes à transmettre ce signal électrique de commande conditionné à une unité de calcul,

    b) une unité (6) de calcul disposant :

    - de moyens aptes à réceptionner ce signal électrique de commande conditionné,
    - de moyens aptes, par application d'une fonction de transformation mathématique audit signal électrique de commande conditionné et aux valeurs des paramètres qui sont fonction des caractéristiques du brûleur, à convertir ce signal électrique de commande conditionné et ces valeurs des paramètres en consommation de combustible de façon à déterminer la consommation de combustible à chaque instant t,
    - de moyens aptes à intégrer, en fonction du temps, cette consommation de combustible à chaque instant t de manière à déterminer la consommation énergétique durant ledit intervalle de temps.

9. Dispositif selon la revendication 8, **caractérisé en ce qu'**il est doté de moyens capables de réceptionner des données réelles de consommation ainsi que de moyens capables de déterminer, sur base de ces données, les valeurs des paramètres qui sont fonction des caractéristiques du brûleur.

10. Dispositif selon la revendication 9, **caractérisée en ce que** les paramètres qui sont fonction des caractéristiques du brûleur comprennent, selon le type de brûleur utilisé, le débit maximal du brûleur (PM), le débit de démarrage du brûleur (Pd), le débit 1ère allure du brûleur (P1a), le débit minimum du brûleur (Pm), la durée de la période de démarrage du brûleur (Ta) et la durée de la période de démarrage 1ère allure du brûleur (t1a).

11. Dispositif selon la revendication 8, **caractérisé en ce qu'**il est doté de moyens capables de réceptionner des données propres au brûleur ou en relation avec celui-ci afin de réaliser, à l'aide d'un moyen approprié, une estimation théorique et automatique de la courbe de transformation du signal électrique de commande de ce brûleur en consommation énergétique.

**12.** Dispositif selon la revendication 11, **caractérisé en ce que** les données propres au brûleur ou en relation avec celui-ci comprennent le type de brûleur utilisé, sa puissance nominale théorique et ses puissances en régime intermédiaire ainsi que le type de combustible utilisé et les caractéristiques de celui-ci.

**13.** Dispositif selon la revendication 11 ou 12, **caractérisé en ce que** le moyen approprié est un logiciel informatique.

| Brûleurs simple allure | | | |
|---|---|---|---|
| Débit brûleur | | PM | 1. Démarrage pleine puissance (paramètre : PM) |
| | Temps | | |
| Débit brûleur | | PM | 2. Démarrage à débit limité (paramètres : PM, Pd, Td) |
| | Temps | | |
| Débit brûleur | | PM P1a | 3. Démarrage à petite allure (paramètres : PM, P1a, T1a) |
| | Temps | | |
| **Brûleurs double allure** | | | |
| Débit brûleur | | PM P1a | 4. Brûleur deux allures (paramètres : PM, P1a) |
| | Temps | | |
| Débit brûleur | | PM P1a | 5. Brûleur tout ou peu progressif (paramètres : PM, P1a) |
| | Temps | | |
| **Brûleur modulant** | | | |
| Débit brûleur | | PM Pm | 6. Brûleur modulant 4-20 mA ou 0-10V (paramètres : PM, Pm) |
| | Temps | | |

Fig.1

Fig.2

Europäisches
Patentamt

European
Patent Office

Office européen
des brevets

**RAPPORT DE RECHERCHE EUROPEENNE**

Numéro de la demande

EP 11 44 7030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 94/18527 A1 (ZEGRAY JOHN [CA]) 18 août 1994 (1994-08-18) * page 1, ligne 1 - ligne 3 * * page 2, ligne 24 - page 3, ligne 23 * * page 8, ligne 20 - page 9, ligne 3 * * figures 2,3 * | 1-13 | INV. G01F1/56 F23N5/18 |
| A | US 5 270 684 A (FARACI JR VITO [US]) 14 décembre 1993 (1993-12-14) * colonne 3, ligne 43 - ligne 64 * * figures 2A,2B,3 * | 1,8 | |
| A | US 5 443 206 A (COHEN ISAAC [US]) 22 août 1995 (1995-08-22) * colonne 1, ligne 60 - colonne 3, ligne 13 * * figure 2 * | 1,8 | |
| A | US 4 530 247 A (HAAS AARNE T [US]) 23 juillet 1985 (1985-07-23) * colonne 4, ligne 64 - colonne 6, ligne 3 * * figure 3 * | 1,8 | DOMAINES TECHNIQUES RECHERCHES (IPC) F23N G01F |
| A | US 4 262 530 A (GERQUEST ARTHUR S) 21 avril 1981 (1981-04-21) * colonne 2, ligne 35 - colonne 3, ligne 4 * * figure 1 * | 1,8 | |
| A,D | WO 2004/001297 A1 (ENERGY CONTROL SYSTEMS INTERNA [NO]; LINDBERG KARL-ERIK [NO]) 31 décembre 2003 (2003-12-31) * page 3, dernier alinéa - page 5, alinéa 4 * * revendications 1,4; figure 2 * | 1,8 | |

Le présent rapport a été établi pour toutes les revendications

| Lieu de la recherche | Date d'achèvement de la recherche | Examinateur |
|---|---|---|
| Munich | 12 juillet 2012 | Gavriliu, Costin |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**EP 2 607 862 A1**

**ANNEXE AU RAPPORT DE RECHERCHE EUROPEENNE
RELATIF A LA DEMANDE DE BREVET EUROPEEN NO.**

EP 11 44 7030

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-07-2012

| Document brevet cité au rapport de recherche | | Date de publication | Membre(s) de la famille de brevet(s) | | Date de publication |
|---|---|---|---|---|---|
| WO 9418527 | A1 | 18-08-1994 | CA<br>US<br>WO | 2089328 A1<br>5511411 A<br>9418527 A1 | 12-08-1994<br>30-04-1996<br>18-08-1994 |
| US 5270684 | A | 14-12-1993 | AUCUN | | |
| US 5443206 | A | 22-08-1995 | AUCUN | | |
| US 4530247 | A | 23-07-1985 | AUCUN | | |
| US 4262530 | A | 21-04-1981 | AUCUN | | |
| WO 2004001297 | A1 | 31-12-2003 | AU<br>GB<br>WO | 2003237721 A1<br>2389891 A<br>2004001297 A1 | 06-01-2004<br>24-12-2003<br>31-12-2003 |

EPO FORM P0460

Pour tout renseignement concernant cette annexe : voir Journal Officiel de l'Office européen des brevets, No.12/82

**EP 2 607 862 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004001297 A